# EUROPEAN PATENT SPECIFICATION

(11) **EP 1 408 594 B1**
(45) Date of publication and mention of the grant of the patent: **08.05.2013**
(21) Application number: 03022214.5
(22) Date of filing: 30.09.2003
(51) Int. Cl.: H02H 7/122, H02H 3/16, G01R 31/02

(54) **DC ground fault detector and system-interconnected generation device using the DC ground fault detector**
Feststellung eines Gleichspannungs-Erdschlusses und System zwischengeschalteter Generator mit Gleichspannungs-Erdschlussdetektor
Détection d'un court-circuit à la masse à tension continue et générateur connecté entre systèmes avec détecteur d'un court-circuit à la masse à tension continue

(30) Priority: 10.10.2002 JP 2002297190; 29.08.2003 JP 2003305875
(43) Date of publication of application: 14.04.2004
(73) Proprietor: SANYO ELECTRIC CO. LTD, Moriguchi-shi, Osaka-fu 570 (JP)
(72) Inventor: Madenokoji, Masaki, Honjyo-shi Saitama-ken (JP); Makino, Yasuhiro, Oosato-gun Saitama-ken (JP); Onizuka, Keigo, Oura-gun Gunma-ken (JP)
(74) Representative: Hoarton, Lloyd Douglas Charles

(56) References cited:
- EP-A- 1 229 629
- PATENT ABSTRACTS OF JAPAN vol. 1999, no. 09, 30 July 1999 (1999-07-30) -& JP 11 122819 A (FUJI ELECTRIC CO LTD), 30 April 1999 (1999-04-30)
- PATENT ABSTRACTS OF JAPAN vol. 013, no. 353 (P-913), 8 August 1989 (1989-08-08) & JP 01 113674 A (ASAHI CHEM IND CO LTD; others: 01), 2 May 1989 (1989-05-02)
- PATENT ABSTRACTS OF JAPAN vol. 2003, no. 12, 5 December 2003 (2003-12-05) & JP 2003 262655 A (FUJI ELECTRIC CO LTD), 19 September 2003 (2003-09-19)

## Description

### BACKGROUND OF THE INVENTION

### Field of the Invention

The present invention relates to a system-interconnected generation device, which includes a DC ground fault detector operative to detect a ground fault about DC power lines that are arranged to allow a DC current generated at a generation unit to flow therethrough, and which regeneratively supplies the power generated at the generation unit to a commercial power system.

### Description of the Related Art

A recent widespread system-interconnected generation device self-consumes part of the power generated using sunlight as an energy source and regeneratively supplies extra power not self-consumed to a commercial power system.

Such the system-interconnected generation device comprises a booster circuit operative to boost a voltage of DC power generated from a solar battery, and an inverter circuit operative to control the DC power to be converted into AC power with the same frequency as that of AC power in the commercial power system.

The system-interconnected generation device may also comprise a current sensor located near DC power lines that are arranged to connect the solar battery to the system-interconnected generation device as disclosed in the patent publication 1 (JP-A-2001/275259). In this case, when a ground fault is determined about the DC power lines based on a variation in the output from the current sensor, the solar battery is disconnected from the system-interconnected generation device to improve safety.

In the conventional system-interconnected generation device, the current sensor for DC ground fault detection (a current transformer) may suffer a temperature drift. In order to reduce such the temperature drift to improve the accuracy of the detection, it is required to use an expensive material such as a saturable reactor for a magnetic wound core, which causes a problem associated with the cost elevation.

For solving the problem, the use of an inexpensive current sensor with a relatively larger temperature drift may be considered. In order to ensure a high accuracy of detection, however, a new problem arises with respect to addition of a temperature correcting circuit or selective use of a current sensor with a relatively smaller temperature drift.

Japanese Patent Publication No. 11122819 discloses a DC ground fault detector which is connected to a DC to AC power converter. The detector incorporates a transformer which enables a common current to be measured to detect a ground fault.

The present invention seeks to provide an inexpensive DC ground fault detector and a system-interconnected generation device that includes the DC ground fault detector.

According to one aspect of the present invention, there is provided a DC ground fault detector as defined in claim 1 hereinafter.

According to another aspect of the present invention, there is provide a system-interconnected generation device according to claim 2 as defined hereinafter.

The generation unit may comprise a solar battery operative to receive sunlight to generate the DC power.

In embodiments of the present invention, it is not required to provide addition of a temperature correcting circuit and selective use of a current sensor with a relatively smaller temperature drift for detecting a DC ground fault and ensuring a high safety with a low cost.

### BRIEF DESCRIPTION OF THE DRAWINGS

The present invention will be more fully understood from the following detailed description with reference to the accompanying drawings, in which:
Fig. 1 is a circuit diagram showing an embodiment according to the present invention applied to a system-interconnected generation device together with a commercial power system;
Fig. 2 is a block diagram showing a DC ground fault detector of Fig. 1;
Fig. 3 illustrates a temperature dependency in a relation of a current difference between DC lines to an output current from a detecting core (an input voltage to a first AID port); and
Fig. 4 is a flowchart of brief processes in the embodiment.

### DETAILED DESCRIPTION OF THE PREFERRED EMBODIMENTS

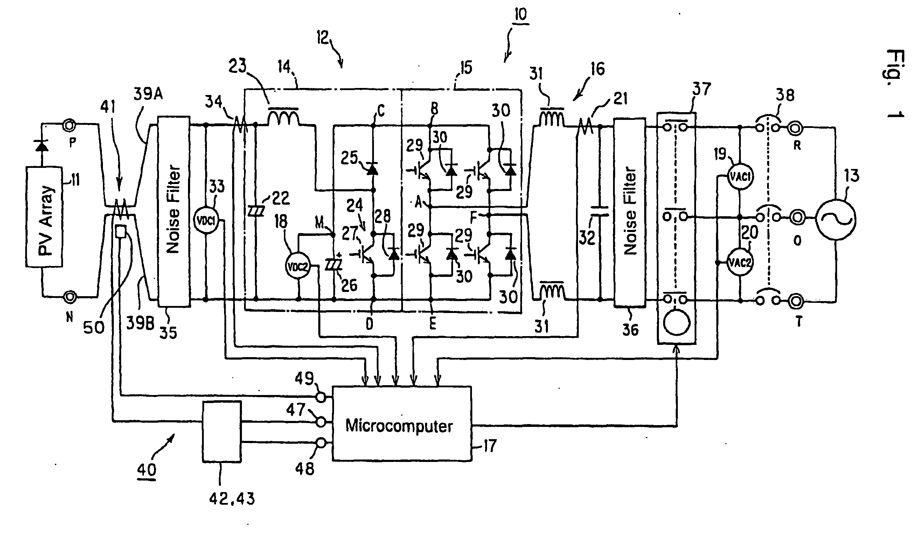

The preferred embodiments of the present invention will be described next with reference to Figs. 1-4 in the drawings.

Fig. 1 is a circuit diagram showing an embodiment of a system-interconnected generation device connected to a generation unit and a commercial power system. The generation unit may include a solar battery as well as a fuel cell and a commonly known generator. In the cause of an AC generator, rectified DC power is employed.

As shown in Fig. 1, a system-interconnected generation device 10 is connected through terminals P and N to a solar battery 11.

The system-interconnected generation device 10 is also connected (interconnected) through terminals R, O and T to the commercial power system 13 (shown as a single-phase three-wire system). The system-interconnected generation device 10 is operative to convert DC power, generated at the solar battery 11 when it is exposed to sunlight, into AC power with the same frequency as that of the commercial power system 13, which is regeneratively supplied to the commercial power system 13.

The solar battery 11 has an array configuration (PV array) that consists of a plurality of solar battery cells.

The system-interconnected generation device 10 mainly comprises a booster circuit 14, an inverter circuit 15, a low-pass filter 16, and a microcomputer 17 serving as a controller.

The following sensors are connected to the microcomputer 17. A generated voltage sensor 33 detects a voltage of the DC power supplied from the solar battery 11 to the booster 14. A generated current sensor 34 similarly detects a current thereof. A boosted voltage sensor 18 detects a voltage of the DC power boosted at the booster 14. A first system voltage sensor 19 detects an AC voltage between the terminals R and O from the system-interconnected generation device. A second system voltage sensor 20 similarly detects an AC voltage between the terminals O and T. An inverter output current sensor 21 detects an AC current of the AC power output from the inverter 15. A temperature sensor 50 is arranged to detect a temperature on a zero-phase current transformer (ZCT) 41 or an ambient temperature in the vicinity thereof.

Through a noise filter 35, the booster 14 receives the unstable DC power generated from the solar battery 11 (the generated power varies depending on environmental factors such as clear, cloudy, rainy, morning, day and night). The booster 14 boosts the DC power so as to have a higher voltage than the system voltage of the commercial power system 13. The booster 14 includes a smoothing capacitor 22, a choke coil 23, a switching circuit 24, a diode 25 and a capacitor 26.

The smoothing capacitor 22 stabilizes the DC power supplied to the choke coil 23 and the switching circuit 24.

The switching circuit 24 includes a switching element 27 and a diode 28. A power transistor, a power MOSFET or an IGBT may be suitable for the switching element 27. As the switching element 27 turns on/off, the current accumulated in the choke coil 23 boosts the anode side of the diode 25 to a high voltage in addition to the voltage on the smoothing capacitor 22. The current flows through the diode 25 into the capacitor 26 to elevate the terminal voltage across the capacitor 26 close to the high voltage. In this case, the diode 25 prevents the reverse flow of power from the capacitor 26.

The switching element 27 is kept in ON-state for a certain time period (that is, ON-duty), which is adjustable to control the voltage placed across the capacitor 26 in the booster 14. If the system voltage in the commercial power system 13 is equal to AC 200V, it has a crest value (peak value) of ± 280V. Therefore, it is required to boost the voltage at the booster 14 up to DC 280V or more to regeneratively supply the AC power to the commercial power system 13 from a system interconnection device 12. In practice, the voltage boosted at the booster 14 is set at a value higher than 280V by 20-30V in consideration of an on-resistance of a switching element 29 (later described) in the inverter 15 and a resistance of a reactor 31 in the low-pass filter 16.

The inverter 15 includes four bridged switching elements 29 (to generate a single-phase AC; and six to generate a three-phase AC) each provided with a diode 30 (flywheel diode). The inverter 15 converts the DC power boosted at the booster 14 into a pseudo-sinusoidal AC power with the same frequency and the same or almost same phase as those of the commercial power system 13.

The inverter 15 turns the switching elements 29 on/off to convert the DC power received from the booster 14 into a pulse-width-modulated (PWM) AC power. The waveform of the AC power (AC current, AC voltage) output from the inverter 15 can meet the AC voltage waveform of the system voltage in the commercial power system 13 when the time period of the switching element 29 in ON-state (ON-duty) is appropriately adjusted. Consequently, the phase and frequency of the AC power output from the inverter 15 can be substantially coincident with that of the system power in the commercial power system 13.

The current smoothing circuit 16 includes a reactor 31 and a capacitor 32, as shown in Fig. 1, to smooth the current of the AC power converted by the inverter 15. The AC power smoothed by the current smoothing circuit 16 is regeneratively supplied to the commercial power system 13 through a noise filter 36, a system release contactor 37 and a protective relay 38.

The release contactor 37 is operative under the control of the microcomputer 7 to connect/disconnect the system-interconnected generation device 10 with the commercial power system 13. As described later in detail, the microcomputer 7 provides an actuation signal to the release contactor 37 to disconnect the system-interconnected generation device 10 from the commercial power system 13 for terminating the running of the system-interconnected generation device 10; and to connect the system-interconnected generation device 10 with the commercial power system 13 for beginning the running of the system-interconnected generation device 10.

The generated voltage sensor 33 includes an isolation amplifier, for example, to measure the voltage of the DC power generated at the solar battery 11 and supplied to the booster 14 and provide the measured value to the microcomputer 17.

The generated current sensor 34 includes a current transformer, for example, to measure the current of the DC power generated at the solar battery 11 and supplied to the booster 14 and provide the measured value to the microcomputer 17.

The boosted voltage sensor 18 includes an isolation amplifier, for example, to measure the boosted voltage output from the booster 14 and provide the measured value to the microcomputer 17.

The first system voltage sensor 19 and the second system voltage sensor 20 have transformers to measure the system voltages of the system power in the commercial power system 13 and provide the measured values to the microcomputer 17.

The inverter output current sensor 21 includes a current transformer, for example, to measure the AC current converted at the inverter 15 and provide the measured value to the microcomputer 17.

The temperature sensor 50 is operative to measure a temperature on the zero-phase current transformer (ZCT) 41 or an ambient temperature in the vicinity thereof and provide the measured value to the microcomputer 17.

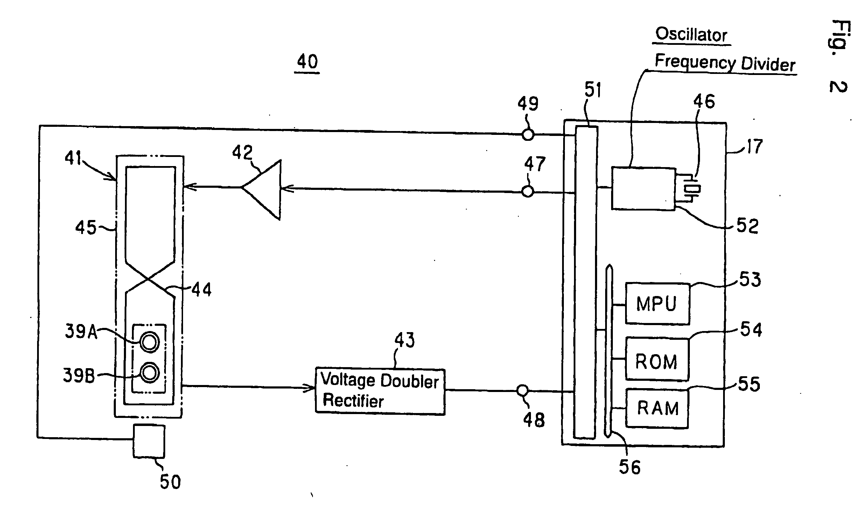

Fig. 2 is a block diagram of the DC ground fault detector 40 briefly configured.

The microcomputer 17, or a part of the DC ground fault detector 40, is provided with a PWM (Pulse Width Modulation) port 47 configured to provide an ON/OFF signal; a first A/D port 48 configured to receive an analog voltage; a second A/D port 49 configured to receive an analog voltage, or the measured value from the temperature sensor 50; an I/O interface 51; an oscillator and frequency divider 52; a MPU (Central Processing Unit) 53; a ROM (Read Only Memory) 54; a RAM (Random Access Memory) 55; and a bus (signal lines) 56.

The I/O interface 51 controls signal (data) communications among the PWM port 47, the second A/D port 49, the MPU, and the oscillator and frequency divider.

The oscillator and frequency divider 52 creates a reference oscillation signal (reference clock signal) based on oscillations of a quartz vibrator 46 and, based on the reference oscillation signal, a pulse signal train with a certain frequency, ON-duty (for example, 50%) and voltage. This pulse signal train is output to the zero-phase current transformer (ZCT) 41 as an exciting pulse signal through the I/O interface 51, the PWM port 47 and an exciting amplifier (buffer amplifier) 42. An example of the exciting pulse signal output has a pulse waveform with a voltage of +2.5V ± 2.5V.

The MPU 53 totally controls the microcomputer 17 in accordance with a control program stored in the ROM 54.

The ROM 54 previously stores control data containing the control program.

The RAM 55 is employed to store various data temporarily.

The bus 56 connects the I/O interface 51, the MPU 53, the ROM 54 and the RAM 55 to each other.

Brief operation of the microcomputer 17 is described next.

With the above configuration, the microcomputer 17 receives the measured value from the generated voltage sensor 33 and the measured value from the generated current sensor 34 and determines the power generated at the solar battery 11 through computation. When the generated power reaches or exceeds a predetermined value (appropriately determinable in accordance with the number of cells in the solar battery or an eigenvalue of the system-interconnected generation device 10), the microcomputer 17 turns on the release contactor (normally-open contact) 37 to close the contact. Consequently, the system-interconnected generation device 10 is connected with the commercial power system 13 to begin the running of the system-interconnected generation device 10.

The AC power supplied from the system-interconnected generation device 10 to the commercial power system 13 is required to have a higher crest value (peak value) than a total of crest values of the AC power measured at the first system voltage sensor 19 and the AC power measured at the second system voltage sensor 20. Accordingly, the microcomputer 17 adjusts the DC voltage measured at the boosted voltage sensor 18 so as to exhibit a higher value by 20-30V than the total of the crest values. This adjustment can be executed in the microcomputer 17 by adjusting the ON-duty of the ON/OFF signal given to the switching element 27 for obtaining a pseudo-sinusoidal wave with a predetermined pattern to be output to the booster 14.

The microcomputer 17 determines zero-cross points in the waveforms (sinusoidal waves) of the system voltage detected by the first system voltage sensor 19 and the second system voltage sensor 20 to establish synchronization with the ON/OFF signal given to the switching element 27 for obtaining the pseudo-sinusoidal wave with the predetermined pattern.

When the microcomputer 17 controls the booster 14 and the inverter 15, the substantially same AC power as the AC power in the commercial power system 13 is supplied from the system-interconnected generation device 10 to the commercial power system 13.

The system-interconnected generation device 10 includes two DC lines 39A and 39B arranged to connect the solar battery 11 with the booster 14. Through the DC lines 39A and 39B, a DC current flows from the solar battery 11 to the booster 14.

In this embodiment the zero-phase current transformer (ZCT) 41 of the DC ground fault detector 40 is located around the two DC lines 39A and 39B, or target conductive lines to be measured.

The DC ground fault detector 40 is described below.

As shown in Fig. 2, the DC ground fault detector 40 includes the zero-phase current transformer (ZCT) 41, the exciting amplifier 42, a voltage doubler rectifier 43, and the microcomputer 17. It detects a DC ground fault about the system-interconnected generation device 10 at the side close to the solar battery 11.

The zero-phase current transformer (ZCT) 41 includes a detecting core 44 configured to receive the two DC lines 39A and 39B passing therethrough. This zero-phase current transform (ZCT) has a wound core composed of an inexpensive magnetic substance such as permalloy. The detecting core (detecting magnetic substance) 44 in the zero-phase current transform (ZCT) 41 is housed in a housing 45.

Through the exciting amplifier 42, an exciting pulse signal output from the PWM port 47 of the microcomputer 17 is fed to the winding of the zero-phase current transformer (ZCT) 41 to excite the detecting core 44.

With this configuration, the detecting core 44 kept in an excited state measures a difference (definite difference) between currents flowing in the two DC lines 39A and 39B and provides an output current (AC) in accordance with the current difference to the voltage doubler rectifier 43.

While no ground fault occurs about the DC line 39A and the DC line 39B, the currents flowing in the two DC lines 39A and 39B are identical and, because the symmetrical positive and negative currents are cancelled, the output current from the detecting core 44 comes to zero.

To the contrary, if a ground fault occurs about the DC line 39A or the DC line 396, the current flowing in the DC line 39A and the current flowing in the DC line 39B cause a difference (a current difference ΔI) corresponding to the extent of the ground fault.

The voltage doubler rectifier 43 rectifies the output current (AC) provided from the detecting core 44 of the zero-phase current transformer (ZCT) 41 and converts the rectified DC voltage into a double or more voltage, which is provided to the first A/D port 48 (A/D: Analog to Digital) of the microcomputer 17.

The microcomputer 17 detects if a DC ground fault occurs about the DC lines 39A, 39B based on the magnitude of the voltage applied to the first A/D port 48.

Detection of the ground fault is described next.

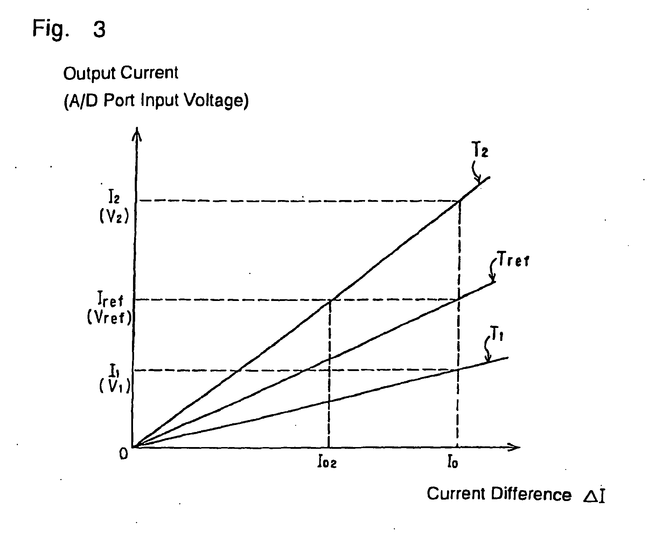

Fig. 3 illustrates a relation of the current difference between currents flowing in the DC lines 39A and 39B to the output current from the detecting core 44 (∝ the input voltage of the first A/D port 48).

For example, as shown in Fig. 3, an ambient temperature in the vicinity of the detecting core 44 is assumed equal to a reference temperature Tref. In this example, if the current difference ΔI between currents flowing in the DC lines 39A and 39B exceeds I0 (for example, 100 mA), the output current from the detecting core 44 reaches I = Iref. In this case, it is determined that a ground fault occurs about the DC lines 39A and 39B.

When a voltage above Vref corresponding to the current difference ΔI = 10 is input to the first A/D port 48, the MPU 53 in the microcomputer 17 determines that a ground fault occurs about the DC lines 39A and 39B, and detects a DC ground fault.

In practice, however, temperature dependency is found in the current difference ΔI between currents flowing in the DC lines 39A and 39B or the output current I from the detecting core 44.

For example, in the case of the temperature T1 and the current difference ΔI = I0, the output current I1 from the detecting core 44 falls in:
I1 < Iref
Accordingly,
V1 < Vref
In this case, the MPU 53 in the microcomputer 17 can not detect any DC ground fault in spite of an actual occurrence of the DC ground fault.

In contrast, in the case of the temperature T2 and the current difference Δ I = I0, the output current I1 from the detecting core 44 falls in:
I1 > Iref
Accordingly,
V1 > Vref
Thus, the MPU 53 in the microcomputer 17 can detect a DC ground fault. In this case, however, the current I1 output from the detecting core 44 exceeds Iref even within a range of the current difference ΔI between I02 and I0. In the range of the current difference ΔI, the MPU 53 in the microcomputer 17 may detect a DC ground fault even though no DC ground fault occurs actually.

In the present embodiment, based on the temperature detected at the temperature sensor 50 in the vicinity of the detecting core 44, the MPU 53 corrects the voltage input to the first A/D port 48 through a temperature corrective computation. Thus, independent of the actual temperature, the voltage input to the first A/D port 48 is converted into a voltage at the reference temperature Tref.

Operation of the DC ground fault detector 40 on normal operation is described next.

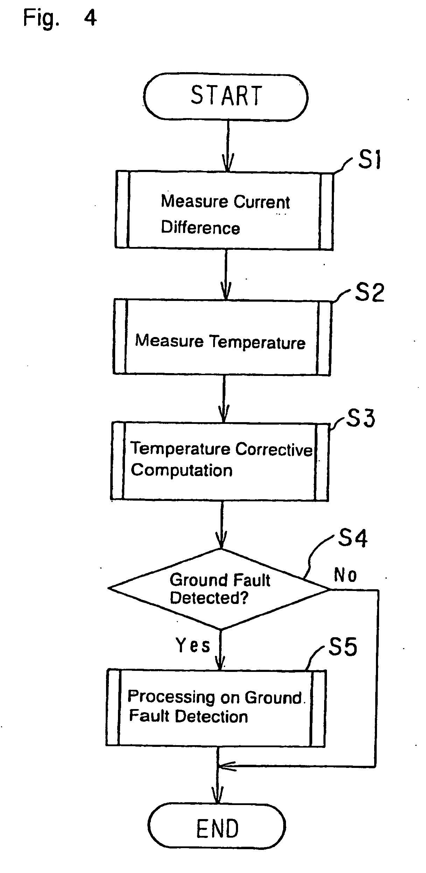

Fig. 4 is a flowchart of brief processes in the DC ground fault detector 40.

Through the I/O interface 51, the MPU 53 receives the voltage input to the first A/D port 48 originated from the detecting core 44 and processed in the voltage doubler rectifier 43 to measure a current difference (Step S1).

The MPU 53 then receives the voltage input to the second A/D port 49 from the temperature sensor 50 via the I/O interface 51 to measure an actual temperature Tm in the vicinity of the detecting core 44 (Step S2).

The MPU 53 refers the ROM 54 next and, based on the temperature Tm measured at Step S2, corrects the voltage Vm input to the first A/D port 48 into a voltage at the reference temperature Tref to obtain a corrected voltage Vmc through a temperature corrective computation (Step S3).

The MPU 53 then determines if the corrected voltage Vmc is above the reference voltage Vref to determine if a ground fault is detected (Step S4).

In the determination at Step S4, if the corrected voltage Vmc is below the reference voltage Vref (Step S4: No), the MPU 53 determines that no ground fault is detected. In this case, the MPU 53 terminates the process of DC ground fault detection at that timing.

In the determination at Step S4, if the corrected voltage Vmc is above the reference voltage Vref (Step S4: Yes), the MPU 53 determines that a ground fault is detected. In this case, the MPU 53 performs processes after the ground fault detection such as disconnection of the current circuit and notification to the user (with an alarm output and an alert lamp turned-on), and terminates the process of DC ground fault detection.

During operational halts of the system-interconnected generation device 10, no current flows from the solar battery 11 in the DC lines 39A, 39B. Therefore, the output current from the detecting core 44 of the current sensor 41 also comes to zero. If the output current from the detecting core 44 is not equal to zero during operational halts of the system-interconnected generation device 10, a voltage is therefore input to the A/D port 48. In such the case, the MPU 53 in the microcomputer 17 determines an occurrence of malfunction in the current sensor 41 and outputs an alarm, for example.

As described above, according to the present embodiment, an inexpensive ZCT (zero-phase current transformer) for a common AC ground fault circuit breaker can be employed to configure the detecting core 44 in the zero-phase current transformer (ZCT) 41 for measuring the difference between the currents flowing in the DC lines 39A, 39B connected to the solar battery 11. Therefore, the zero-phase current transformer (ZCT) 41 can be configured with a low cost. In addition, detection of ground faults using the zero-phase current transformer (ZCT) 41 can ensure a high safety for the system-interconnected generation device 10.

In this case, the temperature in the vicinity of the detecting core 44 is measured, and the temperature corrective computation is executed to reduce the influence from the temperature dependency of the current sensor 41. Therefore, accurate detection of ground faults can be achieved without addition of a temperature correcting circuit and selective use of a zero-phase current transformer (ZCT) with a smaller temperature drift.

The present invention has been described based on the above embodiment, though it is not limited in the embodiment. For example, instead of the measured value from the zero-phase current transformer (ZCT) 41, the reference voltage Vref may be corrected in the microcomputer 17 based on the measured value from the temperature sensor 50.

In the above embodiment, the generation unit is exemplified as the solar battery 11, and the system-interconnected generation device is described for solar-electric power generation. Other generation units such as a wind-force power generator may be employed to regeneratively supply generated power to the commercial power system.

In the above embodiment, the DC ground fault detector 40 is described as applied to the solar-electric power generation though it may also be applied particularly to a fuel cell for generating a high voltage.

Having described the embodiments consistent with the invention, other embodiments and variations consistent with the invention will be apparent to those skilled in the art. Therefore, the invention should not be viewed as limited to the disclosed embodiments.

In the present specification "comprises" means "includes or consists of" and "comprising" means "including or consisting of".

## Claims

1. A DC ground fault detector (40), which comprises a zero-phase current transformer (ZCT) (41) configured to receive a pair of DC power lines (39A, 39B) passing therethrough and operative to output an AC current in accordance with a current difference between currents flowing in said DC power lines to determine a ground fault about said DC power lines based on said current difference and a predetermined reference value, **characterised in that** said DC ground fault detector (4) further comprises a temperature sensor (50) operative to detect a temperature on said zero-phase current transformer (ZCT) or an ambient temperature in the vicinity of said zero-phase current transformer; a temperature corrector (17) operative to correct said AC current output from said zero-phase current transformer (ZCT) or said reference value based on said temperature detected at said temperature sensor; and an exciting amplifier (42) configured to feed an exciting pulse signal to a winding of the zero-phase current transformer (ZCT) to excite a detecting core (44) of the zero-phase current transformer (ZCT) so that the zero-phase current transformer (ZCT) outputs said AC current.

2. A system-interconnected generation device (10) which comprises a booster circuit (14) operative to boost a DC power supplied from a generation unit (11); an inverter circuit (15) operative to convert said DC power boosted at said booster circuit into an AC power with a certain controlled frequency; a controller (17) operative to control said booster circuit and said frequency to regeneratively supply said AC power to a commercial power system (13); and a DC ground fault detector (40) according to claim 1 configured to detect a ground fault about DC power lines arranged to supply DC power from said generation unit.

3. The system-interconnected generation device according to claim 2, **characterised in that** said generation unit (11) comprises a solar battery operative to receive sunlight to generate said DC power.

## Patentansprüche

1. Gleichspannungserdschlussdetektor (40), der einen Nullphasenstromwandler (ZCT) (41) aufweist, der dafür eingerichtet ist, ein Paar Gleichspannungsleitungen (39A, 39B) aufzunehmen, die dort hindurch verlaufen, und im Betrieb einen Wechselstrom gemäß einer Stromdifferenz zwischen Strömen, die in den Gleichstromleitungen fließen, ausgibt, um einen Erdschluss der Gleichstromleitungen anhand der Stromdifferenz und einem vorgegebenen Referenzwert festzustellen, **dadurch gekennzeichnet, dass** der Gleichspannungserdschlussdetektor (4) zudem einen Temperatursensor (50), der im Betrieb eine Temperatur an dem Nullphasenstromwandler (ZCT) oder einer Umgebungstemperatur in der Nähe des Nullphasenstromwandlers misst; einen Temperaturkorrektor (17), der im Betrieb die Wechselstromausgabe von dem Nullphasenstromwandler (ZCT) oder den Referenzwert, der auf der von dem Temperatursensor gemessen Temperatur basiert, korrigiert; und einen Anregungsverstärker (42) aufweist, der dafür eingerichtet ist, ein Anregungspulssignal in eine Wicklung des Nullphasenstromwandlers (ZCT) einzuspeisen, um einen Detektionskern (44) des Nullphasenstromwandlers (ZCT) anzuregen, so dass der Nullphasenstromwandler (ZCT) den Wechselstrom ausgibt.

2. System-zwischengeschaltete Generatorvorrichtung (10), die einen Verstärkerkreis (14), der im Betrieb eine von einer Generatoreinheit (11) zur Verfügung gestellte Gleichspannungsleistung verstärkt, einen Wechselrichterkreis (15), der im Betrieb die verstärkte Gleichspannungsleistung des Verstärkerkreises in Wechselspannungsleistung mit einer kontrollierten definierten Frequenz umwandelt, eine Steuerung (17), die im Betrieb den Verstärkerkreis und die Frequenz zum regenerativen Einspeisen der Wechselspannungsleistung in ein kommerzielles Stromversorgungssystem einspeist, und einen Gleichspannungserdschlussdetektor nach Anspruch 1 aufweist, der dafür ausgebildet ist, einen Erdschluss der Gleichspannungsleitungen zu detektieren, die dafür vorgesehen sind, Gleichspannungsleistung von der Generatoreinheit (11) abzugeben.

3. System-zwischengeschaltete Generatorvorrichtung nach Anspruch 2, **dadurch gekennzeichnet, dass** die Generatoreinheit (11) eine Solarbatterie aufweist, die im Betrieb Sonnenlicht zur Erzeugung von Gleichspannungsleistung nutzt.

## Revendications

1. Un détecteur de court-circuit à la masse à tension continue (40), comprenant un transformateur de courant de phase zéro (41) configuré pour recevoir une paire de lignes électriques à tension continue (39A, 39B) passant par le transformateur et pouvant générer une tension alternative en fonction d'une différence de tension entre les tensions passant dans lesdites lignes électriques à tension continue afin de déterminer la présence d'un court-circuit à la masse aux environs des lignes électriques à tension continue en fonction de ladite différence de tension et d'une valeur de référence prédéterminée, **se caractérisant par le fait que** le détecteur de court-circuit à la masse à tension continue (4) comprend également un détecteur de température (50) pouvant détecter une température sur le transformateur de courant de phase zéro ou une température ambiante dans le voisinage du transformateur de courant de phase zéro ; un correcteur de température (17) pouvant corriger la sortie de tension alternative du transformateur de courant de phase zéro ou la valeur de référence en fonction de la température détectée audit détecteur de température ; et un amplificateur d'excitation (42) configuré pour transmettre un signal d'impulsion d'excitation à un enroulement du transformateur de courant de phase zéro pour exciter un noyau de détection (44) du transformateur de courant de phase zéro afin que le transformateur de courant de phase zéro génère la tension alternative.

2. Un générateur connecté entre systèmes (10) comprenant un circuit amplificateur (14) pouvant amplifier une tension continue fournie par un générateur (11); un circuit inverseur (15) pouvant convertir la tension continue amplifiée au circuit amplificateur en tension alternative avec une certaine fréquence contrôlée ; un contrôleur (17) pouvant contrôler le circuit amplificateur et la fréquence pour fournir par régénération la tension alternative à un système de distribution électrique commercial (13) ; et un détecteur de court-circuit à la masse à tension continue (40) selon la revendication 1 configuré pour détecter un court-circuit à la masse aux environs de lignes électriques à tension continue devant fournir la tension continue à partir du générateur.

3. Le générateur connecté entre systèmes de la revendication 2, **se caractérisant par le fait que** le générateur (11) comprend une batterie solaire pouvant recevoir la lumière du soleil pour générer la tension continue.
